**Europäisches Patentamt**

**European Patent Office**

**Office européen des brevets**

(19)

(11) **EP 1 186 571 A1**

(12) **EUROPEAN PATENT APPLICATION**

(43) Date of publication:
**13.03.2002 Bulletin 2002/11**

(51) Int Cl.$^7$: **C01B 17/04**

(21) Application number: **00203155.7**

(22) Date of filing: **12.09.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Borsboom, Johannes**<br>  **2282 VC Rijswijk (NL)**<br>• **Van Nisselrooij, Petrus, Franciscus, Maria**<br>  **6511 MN Nijmegen (NL)** |
| (71) Applicants:<br>• **GASTEC N.V.**<br>  **NL-7327 AC Apeldoorn (NL)**<br>• **Stork Engineers & Contractors B.V.**<br>  **1043 NT Amsterdam (NL)** | (74) Representative: **Prins, Adrianus Willem et al**<br>  **Vereenigde,**<br>  **Nieuwe Parklaan 97**<br>  **2587 BN Den Haag (NL)** |

(54) **Process for the selective oxidation of hydrogen sulphide to elemental sulphur**

(57)    The invention is directed to a process for the selective oxidation of hydrogen sulphide to elemental sulphur, said process comprising feeding a hydrogen sulphide containing gas to a bed of a catalyst that promotes the selective oxidation of hydrogen sulphide to elemental sulphur, together with an oxygen containing gas, whereby the amount of oxygen in the gasmixture leaving the selective oxidation bed is kept substantially constant at a pre-set value using a feed forward control of the amount of oxygen containing gas to be fed to the selective oxidation.

EP 1 186 571 A1

**Description**

The invention relates to a process for the selective oxidation of hydrogen sulphide, present in gas mixtures, to elemental sulphur.

The necessity of purifying gases, which are further treated in chemical processes, or supplied to buyers, or discharged to the atmosphere, from sulphur compounds, in particular hydrogen sulphide, is generally known. Accordingly, there exists a number of processes which are directed towards the removal of hydrogen sulphide from gas.

The best known and most suitable process for removing sulphur from gas by recovering sulphur from hydrogen sulphide is the so-called Claus process. In this process hydrogen sulphide is converted by oxidation to a considerable extent into elemental sulphur; the sulphur thus obtained is separated from the gas by condensation. The residual gas stream (the so-called Claus tail gas) still contains some $H_2S$ and $SO_2$.

The method of recovering sulphur from sulphur containing gases by the so-called Claus process is based on the following overall reactions:

$$2\,H_2S + 3\,O_2 \rightarrow 2\,H_2O + 2\,SO_2 \tag{1}$$

$$4\,H_2S + 2\,SO_2 \leftrightarrow 4\,H_2O + 6/n\,S_n \tag{2}$$

A conventional Claus converter - suitable for processing gases having an $H_2S$ content of between 50 and 100 % - comprises a burner with a combustion chamber, a waste heat boiler and a sulphur condenser the so-called thermal stage, followed by at least one catalytic stage comprising a reheater, a reactor filled with a catalyst, and a sulphur condenser.

In the burner and combustion chamber, the incoming gas stream, which is rich in $H_2S$, is combusted with an amount of air, so that one third of the $H_2S$ is fully combusted to form $SO_2$

After this partial oxidation of $H_2S$ the non-oxidised part of the $H_2S$ (i.e. basically two-thirds of the amount offered) and the $SO_2$ formed react further in accordance with the Claus reaction:

$$2\,H_2S + SO_2 \leftrightarrow 2\,H_2O + 3/n\,S_n \qquad (2^a)$$

This Claus reaction takes place in the so-called thermal stage (during and after the combustion) and in the subsequent catalytic stages, usually two.

In the Claus process, $H_2S$ is not quantitatively converted to elemental sulphur, mainly due to the fact that the Claus reaction is an equilibrium reaction and therefore the conversion of $H_2S$ and $SO_2$ to elemental sulphur is not complete (see reaction $2^a$).

A residual amount of $H_2S$ and $SO_2$ remains. Now, generally it is not allowed to discharge residual gas containing $H_2S$ to the atmosphere, and so the gas is oxidised, with the hydrogen sulphide and other sulphur compounds as well as the sulphur vapour and sulphur mist present in the gaseous phase being oxidised to sulphur dioxide. With the environmental requirements becoming stricter, this will not be allowed anymore because the sulphur dioxide emission involved is too high. It is therefore necessary to further treat the residual gas of the Claus installation, the tail gas, in a tail gas treater.

Tail gas processes are known to those skilled in the art. The most well-known tail gas processes are the SCOT process, the BSR Selectox process, the Claus sub-dewpoint processes such as Sulfreen, CBA and MCRC, and the Superclaus™ process.

In the Superclaus™ process, as disclosed in US patent specification No. 4,988,494, the $H_2S$ concentration in the gas leaving the last catalytic Claus stage is controlled to have a value ranging between 0.8 and 3 % by volume by reducing the quantity of combustion or oxidation air passed to the oxidation stage.

In the process according to this patent, the $H_2S$ is selectively oxidised to elemental sulphur in a dry bed oxidation stage.

In WO-A 0010693 a process is described, wherein a Claus tail gas is first hydrogenated to remove $SO_2$, prior to subjecting the hydrogenated gas to a further treatment such as a selective oxidation of hydrogen sulphide to elemental sulphur.

These processes have in common that it is tried to improve the recovery of sulphur from the gas-mixtures by optimising the sulphur recovery in the selective oxidation stage with respect to content and distribution of sulphur species in the feed gas. However, there still remains room for improvement, especially in the selective oxidation step.

It has been found that the sulphur yield in the selective oxidation step, i.e. the amount of hydrogen sulphide that is converted to elemental sulphur, and that is recovered in the downstream sulphur condenser, can be further improved through a careful control of certain process parameters.

In the selective oxidation stage air or oxygen is added to the hydrogen sulphide containing gas coming from the last catalytic Claus stage. The oxygen reacts with hydrogen sulphide over a catalyst to sulphur according to the reaction:

$$H_2S + 0.5\ O_2 \rightarrow 1/nS_n + H_2O + heat \tag{3}$$

The sulphur yield is restricted by the following undesired reaction:

$$1/nS_n + O_2 \rightarrow SO_2 \tag{4}$$

An excess of oxygen compared to hydrogen sulphide promotes reaction 4, and leads to a loss in sulphur yield. As reaction 3 is exothermic, the result is a relatively strong temperature increase, which is also favourable for reaction 4.

In the process described in US-A 4,988,494 the control of the amount of oxygen to the selective oxidation reactor is done using an analysis of the oxygen content of the product gas of the selective oxidation and a feed back control loop.

It has been found that this system is rather unreliable with respect to analysis of oxygen content, and requires high maintenance costs. Further the response is rather slow, with the result that it is difficult to react sufficiently fast to variations in hydrogen sulphide content of the feed gas and plant capacity changes. In view of the unreliability of the analyser and the slow feedback control loop, there is a tendency to maintain a too high excess of oxygen, resulting in a decreased yield on sulphur.

The invention is based on the surprising discovery, that the oxygen content in the outlet of the selective oxidation reactor can be controlled at a fixed, predetermined value, to obtain and maintain a high sulphur yield. Additionally it has been noted that controlling the temperature profile over the reactor, in combination with control of this oxygen content, can provide a distinct improvement in sulphur yield, or in other words can decrease the sulphur losses and consequently the sulphur emissions substantially.

Accordingly, in a first aspect the invention is directed to a process for the selective oxidation of hydrogen sulphide to elemental sulphur, said process comprising feeding a hydrogen sulphide containing gas to a bed of a catalyst that promotes the selective oxidation of hydrogen sulphide to elemental sulphur, together with an oxygen containing gas, whereby the amount of oxygen in the gas-mixture leaving the selective oxidation bed is kept substantially constant using a feed forward control of the amount of oxygen containing gas to be fed to the selective oxidation.

In this respect the term 'substantially constant' means that the control is set in such a way that it aims at keeping the oxygen content at the pre-set level ± 5%. The actual value of the oxygen content is determined in dependence of the various process conditions, capacity, space velocity, type of selective oxidation catalyst and the like.

The pre-set value of the oxygen content in the outlet of the selective oxidation is usually between 0.1 and 5 vol.%, more in particularly between 0.5 and 1.5 vol.%.

In a Feed Forward Control of the oxygen content the total process gas flow (kmol/h) to the selective oxidation reactor should be known. In a sulphur plant it is practically impossible to measure a flow of gas containing sulphur vapour. For this reason, the plant capacity or total process gas flow can be determined by measuring the combustion air flow and/or the acid gas flow to the main burner, and converting this flow using a suitable factor. A further input value should be the hydrogen sulphide content in the process gas to the selective oxidation reactor, as this content determines the oxygen consumption and will consequently influence the outlet oxygen concentration. More hydrogen sulphide in the process gas requires more oxygen to the selective oxidation reactor.

This hydrogen sulphide content can be measured by an in-line $H_2S$ analyser in the process gas upstream of the selective oxidation reactor.

The third factor, the pre-set value of the oxygen content of the product gas of the selective oxidation stage will also play a role in determining the amount oxygen to be fed to the selective oxidation. A higher pre-set value of the oxygen content of the outlet requires more air to the selective oxidation reactor.

With the above three factors, pre-set and measured, an effective feed forward control loop can be established.

In addition to this feed forward control of the oxygen content in the reactor outlet, it can additionally be advantageous to impose a specific temperature profile over the reactor, thereby ensuring an optimal sulphur selectivity of the selective oxidation. More in particular this temperature profile comprises that the temperature rise at 50% of the

bed height ($\Delta T_{50}$) is between 45 and 75 % of the temperature rise ($\Delta T$) in the reactor ($\Delta T = T_{out} - T_{in}$). The value of $\Delta T_{50}$ can be controlled by varying the inlet temperature, using suitable heat exchange equipment. This means that the value of $T_{50}$, the temperature at 50 % of the bed height, is between $T_{in}$ + .45 * $\Delta T$ and $T_{in}$ + .75 * $\Delta T$

In the process of the present invention the selective oxidation is carried out over a bed of catalytically active material. The catalyst in this process is preferably anyone of the catalysts described in US-A 4,818740, EP-A 409,353, WO-A 9507856 and WO-A 9732813, the contents of which is included herein by way of reference.

More in particular such a catalyst may be a supported catalyst, having a support that is not catalytically active towards the Claus reaction, and comprises as catalytically active material at least one metal compound, such as an oxide. As metal it is preferred to have iron, chromium, iron and chromium, or iron and zinc. The catalyst may optionally be promoted with one or more promoters, such as alkaline materials, phosphorous compounds, cerium, tin, antimony and the like. The amount of support is preferably between 25 and 99 wt.% of the catalyst. It is also possible to use unsupported mixed metal-oxide catalysts, such as iron-/zinc-/titanium-oxide catalysts or another catalyst that is suitable for the selective oxidation of hydrogen sulphide to sulphur.

The selective oxidation is usually carried out at a reactor inlet temperature within the range of 160 to 300°C. Due to the exothermic nature of the oxidation reaction, the temperature of the (gas in) the reactor rises as the gas passes through the reactor. When the gas leaves the reactor, it usually has a temperature of up to 350°C.

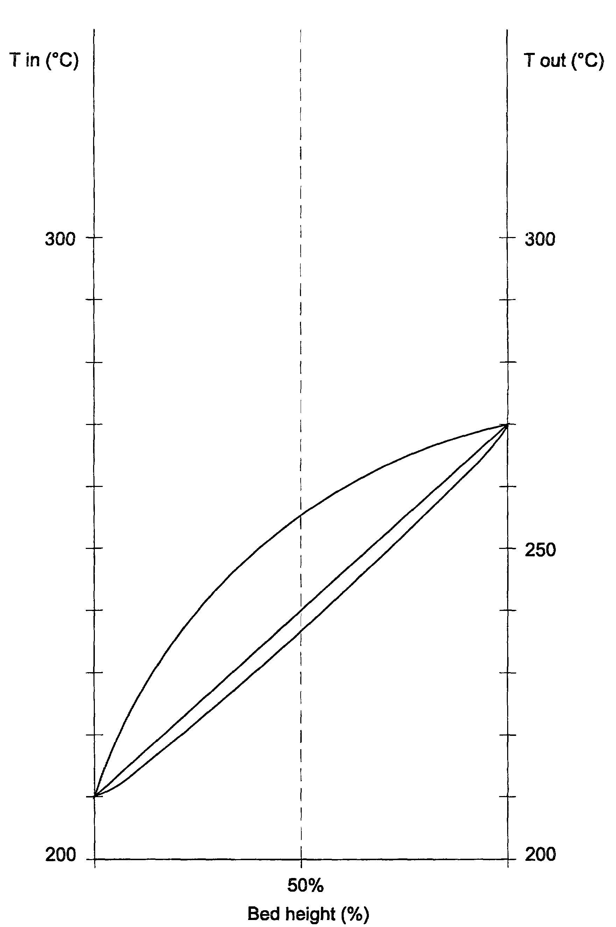

In the attached fig. 1, the temperature profile over a reactorbed of a selective oxidation reactor has been given. In this figure the reactor inlet temperature has been set at 210°C. The reactor outlet temperature has increased to 270°C, due to the exothermic nature of the oxidation of hydrogen sulphide to elemental sulphur. The $T_{50}$ should then be controlled between 255°C, ($T_{in}$ + 75 % of the total $\Delta T$) and 237°C (Tin + 45 % of the total $\Delta T$).

The invention is now elucidated on the basis of the following, non-limiting examples.

EXAMPLE

The effect of a varying oxygen concentration in the product gas of a selective oxidation reactor (using conditions as disclosed in US 4,988,494 and a catalyst in accordance with EP-A 409,353), is illustrated in the following table.

| Case | $H_2S_{in}$ (vol.%) | $O_{2\,out}$ (vol.%) | $T_{in}$ (°C) | Yield to S(%) |
|------|------|------|------|------|
|  |  |  |  |  |
| 1 | 1.0 | 0.5 | 210 | 93.4 |
| 2 | 1.0 | 1.0 | 210 | 86.2 |
| 3 | 1.0 | 1.0 | 200 | 94.2 |
| 4 | 1.0 | 0.5 | 200 | 85.4 |

In case 1 the optimum conditions for the selective oxidation has been established, resulting in a yield to sulphur of the incoming $H_2S$ of 93.4%.

In case 2 the oxygen in the outlet has been increased to 1.0 vol.% as a result of a plant capacity decrease. The reactor inlet temperature was kept at 210°C. Now the yield to sulphur has been dropped significantly as a result of the increased oxygen content and an increased $SO_2$ formation. Subsequently, the reactor inlet temperature was decreased to 200°C and the yield to sulphur is increased to 94.2%, because less $SO_2$ was formed by the oxidation of sulpur vapour.

In case 4 the oxygen concentration has been dropped to 0.5 vol.% as a result of a plant capacity increase. The yield to sulphur decreased to 85.4% as a result of too low an inlet temperature, resulting in a higher slippage of $H_2S$.

**Claims**

1. Process for the selective oxidation of hydrogen sulphide to elemental sulphur, said process comprising feeding a hydrogen sulphide containing gas to a bed of a catalyst that promotes the selective oxidation of hydrogen sulphide to elemental sulphur, together with an oxygen containing gas, whereby the amount of oxygen in the gasmixture leaving the selective oxidation bed is kept substantially constant at a pre-set value using a feed forward control of the amount of oxygen containing gas to be fed to the selective oxidation.

2. Process according to claim 1, wherein the said control is at least based on the amount of oxygen in the gas-mixture leaving the selective oxidation bed, the amount of hydrogen sulphide to be oxidised and/or the feed gas flow.

3.  Process according to claim 1 or 2, wherein the said pre-set value for the oxygen content is between 0.1 and 5 vol. %, more in particular between 0.5 and 1.5 vol.%.

4.  Process according to claims 1-3, wherein the inlet temperature of the selective oxidation bed is controlled in such a way that the temperature rise at 50% of the bed height is between 45 and 75 % of the difference between the outlet and the inlet temperature.

5.  Process according to claims 1-4, wherein the said hydrogen sulphide containing gas is the tail gas of a Claus unit, optionally after intermediate hydrogenation of $SO_2$.

6.  Process according to claims 1-4, wherein the inlet temperature of the selective oxidation is selected between 160 and 300°C.

7.  Process according to claims 1-6, wherein the catalyst for the selective oxidation comprises a support material having applied thereto a catalytically active material.

8.  Process according to claim 7, wherein said catalytically active material has been selected from compounds of iron, iron and chromium, or iron and zinc.

9.  Process for the removal of hydrogen sulphide from a gas-flow, said process comprising feeding the gas-flow to a Claus plant and subjecting the tail gas of the Claus plant to a process according to any one of the claims 1-8.

10. Use of a feed forward control of the amount of oxygen in a process for the selective oxidation of hydrogen sulphide to elemental sulphur, said process comprising feeding a hydrogen sulphide containing gas to a bed of a catalyst that promotes the selective oxidation of hydrogen sulphide to elemental sulphur, together with an oxygen containing gas, to control the amount of oxygen in the gasmixture leaving the selective oxidation bed substantially at a constant pre-set value.

T in (°C)

T out (°C)

300

300

250

250

200

200

50%

Bed height (%)

**European Patent Office**

## EUROPEAN SEARCH REPORT

Application Number

EP 00 20 3155

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 195 10 915 A (LINDE AG) 26 September 1996 (1996-09-26) * the whole document * | 1-10 | C01B17/04 |
| D,A | EP 0 242 006 A (VEG GASINSTITUUT NV ;COMPRIMO BV (NL)) 21 October 1987 (1987-10-21) * the whole document * | 1-10 | |
| A | US 4 438 069 A (PETERMAN LEE G ET AL) 20 March 1984 (1984-03-20) * the whole document * | 1-10 | |
| A | US 4 836 999 A (REED ROBERT L ET AL) 6 June 1989 (1989-06-06) | | |
| A | US RE28864 E (ANDRAL) 15 June 1976 (1976-06-15) | | |

TECHNICAL FIELDS SEARCHED (Int.Cl.7)

C01B

The present search report has been drawn up for all claims

| Place of search | Date of completion of the search | Examiner |
|---|---|---|
| THE HAGUE | 5 February 2001 | Zalm, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 186 571 A1**

## ANNEX TO THE EUROPEAN SEARCH REPORT
## ON EUROPEAN PATENT APPLICATION NO.

EP 00 20 3155

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2001

| Patent document cited in search report | | Publication date | Patent family member(s) | | Publication date |
|---|---|---|---|---|---|
| DE 19510915 | A | 26-09-1996 | CN | 1137485 A | 11-12-1996 |
| EP 0242006 | A | 21-10-1987 | NL | 8600960 A | 16-11-1987 |
| | | | AT | 78794 T | 15-08-1992 |
| | | | AU | 583982 B | 11-05-1989 |
| | | | AU | 7149787 A | 22-10-1987 |
| | | | BR | 8701855 A | 26-01-1988 |
| | | | CA | 1323173 A | 19-10-1993 |
| | | | CN | 87103563 A,B | 06-01-1988 |
| | | | DE | 3780682 A | 03-09-1992 |
| | | | DE | 3780682 T | 10-12-1992 |
| | | | DK | 183087 A | 17-10-1987 |
| | | | ES | 2033800 T | 01-04-1993 |
| | | | FI | 871614 A,B, | 17-10-1987 |
| | | | GR | 3005393 T | 24-05-1993 |
| | | | IN | 169395 A | 12-10-1991 |
| | | | JP | 1841041 C | 25-04-1994 |
| | | | JP | 5051522 B | 02-08-1993 |
| | | | JP | 62297202 A | 24-12-1987 |
| | | | MX | 169298 B | 29-06-1993 |
| | | | NO | 871561 A,B, | 19-10-1987 |
| | | | PT | 84677 A,B | 01-05-1987 |
| | | | SG | 59194 G | 28-04-1995 |
| | | | SU | 1709900 A | 30-01-1992 |
| | | | US | 4988494 A | 29-01-1991 |
| | | | YU | 68387 A | 31-10-1988 |
| US 4438069 | A | 20-03-1984 | US | 4543245 A | 24-09-1985 |
| US 4836999 | A | 06-06-1989 | CA | 1286481 A | 23-07-1991 |
| US RE28864 | E | 15-06-1976 | FR | 2118365 A | 28-07-1972 |
| | | | US | 3871831 A | 18-03-1975 |
| | | | BE | 776877 A | 17-04-1972 |
| | | | CA | 965580 A | 08-04-1975 |
| | | | DE | 2162562 A | 13-07-1972 |
| | | | GB | 1327187 A | 15-08-1973 |
| | | | IT | 944050 B | 20-04-1973 |
| | | | LU | 64468 A | 20-06-1972 |
| | | | NL | 7117438 A | 20-06-1972 |
| | | | SU | 648075 A | 15-02-1979 |
| | | | US | 3933992 A | 20-01-1976 |

EPO FORM P0459

For more details about this annex : see Official Journal of the European Patent Office, No. 12/82

8